# FASCICULE DE BREVET EUROPEEN

(11) **EP 3 242 823 B1**
(45) Date de publication et mention de la délivrance du brevet: **03.10.2018**
(21) Numéro de dépôt: 16700031.4
(22) Date de dépôt: 04.01.2016
(51) Int. Cl.: B60W 50/023, B60K 28/10, B60W 10/04, B60W 10/184, B60W 10/20, H04L 12/40, G06F 11/20, G06F 11/07, G05D 1/00

(54) **ARCHITECTURE POUR SYSTÈME D'AIDE À LA CONDUITE À AUTOMATISATION CONDITIONNELLE**
ARCHITEKTUR FÜR EIN FAHRERASSISTENZSYSTEM MIT BEDINGTER AUTOMATISIERUNG
ARCHITECTURE FOR A DRIVING ASSISTANCE SYSTEM WITH CONDITIONAL AUTOMATION

(30) Priorité: 05.01.2015 FR 1500005
(43) Date de publication de la demande: 15.11.2017
(73) Titulaire: Valeo Schalter und Sensoren GmbH, 74321 Bietigheim-Bissingen (DE)
(72) Inventeur: ROBERT, Caroline, 94046 Créteil Cedex (FR); PICRON, Vanessa, 94046 Créteil Cedex (FR); LEEMAN, Michel, 94046 Créteil Cedex (FR)
(74) Mandataire: Delplanque, Arnaud
(86) Numéro de dépôt international: PCT/EP2016/050025
(87) Numéro de publication internationale: WO 2016/110464

(56) Documents cités:
- EP-A2- 2 587 330
- WO-A1-2013/150244
- DE-A1-102011 108 292
- DE-A1-102012 210 106
- DE-A1-102013 020 177

## Description

La présente invention concerne de manière générale les véhicules automobiles équipés de systèmes automatiques d'assistance à la conduite, et plus précisément les systèmes dits "d'automatisation conditionnelle".

L'automatisation de la conduite avance pour répondre à de nombreux enjeux tels que la sécurité, la mobilité, l'éco-conduite, et l'accessibilité pour tous à la conduite. Aujourd'hui, il est possible d'avoir un véhicule totalement automatisé sans conducteur, sur des zones dédiées. Il n'en va pas de même en ce qui concerne les projets de véhicules automatisés sur route pour lesquels de nombreux problèmes, en particulier dans le domaine juridique et dans le domaine de la sécurité, restent à résoudre avant de voir de tels véhicules en vente. En particulier, dans le cas d'un véhicule automatisé sur route en présence d'un conducteur, la Convention de Vienne édicte, dans son Article 8.5, que le conducteur doit à tout moment être en mesure de contrôler son véhicule.

Le Comité des normes de véhicules automatisés sur route SAE (Acronyme anglo-saxon mis pour Society of Automotive Engineer) a récemment publié un nouveau rapport donnant une classification des niveaux de conduites automatisés, ("Taxonomy and Definitions for Terms Related to On-Road Motor Vehicle Automated Driving Systems", Standard J3016, 16 janvier 2014), avec, pour chaque niveau de classification, les règles de partage de la supervision de la conduite entre le conducteur et le ou les systèmes d'automatisation. Plus précisément, ce rapport définit six niveaux, allant du niveau 0 pour un véhicule sans aucun système d'automatisation, au niveau 5 pour un véhicule complètement automatisé, en passant par différents degrés d'automatisation pour lesquels on augmente à chaque fois la part d'automatisation et on diminue la part de responsabilité du conducteur. Ainsi :
- le niveau 1 correspond aux systèmes d'aide à la conduite relatifs soit au seul contrôle longitudinal du véhicule (par exemple les systèmes connus sous l'acronyme anglo-saxon ACC ou « Autonomous Cruise Control »), soit au seul contrôle latéral du véhicule (par exemple un système d'aide au maintien de trajectoire sur une voie, ou un système d'aide au changement de voie utilisé en cas de dépassement, de rabattement après dépassement, ou d'une procédure d'évitement) ;
- le niveau 2 correspond à un niveau dit « d'automatisation partielle » dans lequel le ou les systèmes d'aide à la conduite peuvent combiner le contrôle latéral et longitudinal du véhicule ;
- le niveau 3 correspond à un niveau dit « d'automatisation conditionnelle » dans lequel on autorise le conducteur, pendant un laps de temps déterminé, et sur certains types de routes (par exemple une autoroute), à ne pas être attentif à la conduite. Les systèmes automatisés y afférant supervisent alors le contrôle latéral et/ou longitudinal du véhicule, mais doivent rendre la responsabilité au conducteur en cas de problème ;
- le niveau 4 correspond à une automatisation complète du véhicule, avec possibilité, pour le conducteur de déléguer la conduite, dans toute situation, et d'y revenir quand il le souhaite, indépendamment de la durée et de toute zone spécifique ;
- le niveau 5 correspond à un véhicule complètement automatisé, sans possibilité pour le conducteur d'interagir.

Les niveaux 0 à 5 selon l'SAE correspondent sensiblement aux niveaux 0 à 4 de l'Agence fédérale Américaine NHTSA ("National Highway Traffic Safety Administration") chargée de la sécurité routière.

En raison de l'Article précité de la Convention de Vienne, les véhicules de niveau 3 à 5 ne sont aujourd'hui pas autorisés par la législation. Les niveaux 0 à 2 sont en revanche autorisés car le conducteur reste bien le seul superviseur de la conduite.

On s'intéresse dans la suite aux projets des futurs véhicules automatisés de niveau 3 selon les Standards SAE ou NHTSA, équipés d'un système d'automatisation conditionnelle. L'acceptation d'une modification de la Convention de Vienne, qui impose aujourd'hui une responsabilité permanente du conducteur, passe a minima par la mise en oeuvre d'un certain nombre de procédures de sûreté de fonctionnement et de stratégies pour permettre au conducteur de revenir à la supervision de la conduite en cas de défaillances du système.

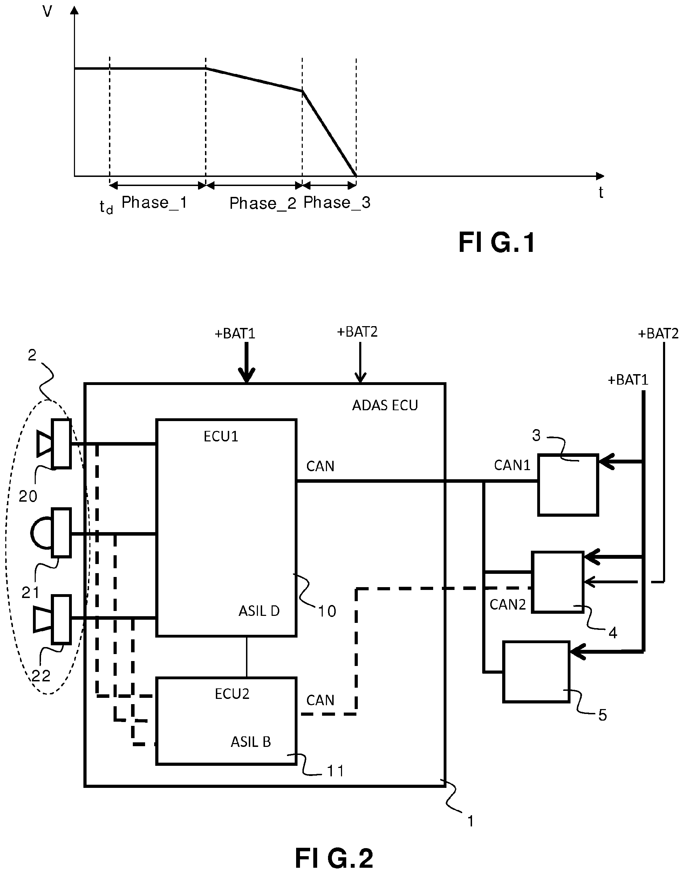

Une stratégie particulièrement importante concerne le retour à l'état sûr dans le cas où le conducteur ne serait pas en mesure de reprendre la main. Dans ce cas, et notamment lorsque le véhicule roule sur autoroute à une vitesse relativement faible, il peut être suffisant que le système prenne en charge un arrêt du véhicule dans sa voie de roulage. Les différentes phases généralement mises en oeuvre en application de cette stratégie sont illustrées schématiquement sur la figure 1 qui représente les conséquences de cette prise en charge sur la vitesse du véhicule en fonction du temps.

Sur cette figure 1, t_{d} représente l'instant de détection d'une défaillance critique qui nécessite que le conducteur reprenne théoriquement la main. A partir de cet instant, le système d'automatisation conditionnelle doit certes rendre la main au conducteur, mais doit néanmoins assurer la fonctionnalité pendant un court laps de temps, typiquement entre cinq et dix secondes, pour permettre au conducteur de reprendre effectivement le contrôle de la conduite. Cette phase est représentée par la phase_1 sur la figure, et montre que la vitesse du véhicule reste constante. Si le conducteur n'a pas réagi à l'issue de cette phase_1, le système commence à freiner doucement (phase_2 sur la figure 1, également entre cinq et dix secondes). Enfin, si le conducteur n'a toujours pas réagi à l'issue de cette phase_2, le système contrôle un freinage plus important jusqu'à l'arrêt total du véhicule. Cette phase est représentée par la phase_3 sur la figure 1.

Sur le plan fonctionnel, le système d'automatisation conditionnelle doit, pour assurer ce retour à l'état sûr, être capable de contrôler ce qui se passe devant le véhicule, de commander le système de freinage et le système de contrôle moteur pour régler la vitesse en conséquence, et de commander le système électronique de contrôle de la direction pour rester sur une même voie de conduite.

Ces exigences en termes de sûreté de fonctionnement impliquent nécessairement d'utiliser une architecture avec beaucoup de redondance, ce qui vient grever le coût de ces systèmes. Ainsi, conformément à la norme internationale ISO 26262 qui définit notamment une classification de la criticité des défaillances selon quatre niveaux dits "ASIL A, ASIL B, ASIL C et ASIL D" (initiales anglo-saxonnes mises pour Automotive Safety Integrity Level), un système de niveau 3 (automatisation conditionnelle) doit être ASIL D, ce qui entraîne en particulier de prévoir sur un véhicule au moins trois technologies différentes de capteurs pour observer une même zone de l'environnement du véhicule. On assure ainsi une performance de bonne détection suffisante pour être compatible d'un objectif de sécurité ASIL D, et on évite également qu'un brouilleur externe vienne rendre simultanément inefficaces les trois types de capteurs.

Par ailleurs, dans les architectures connues, le calculateur du système, les connexions, typiquement par bus CAN, permettant les échanges entre d'une part, les capteurs et ce calculateur, et d'autre part, le calculateur du système et les autres calculateurs impliqués dans la stratégie de retour à l'état sûr (Calculateur du système de freinage, calculateur du contrôle moteur et calculateur du contrôle de direction), ainsi que les alimentations nécessaires au fonctionnement de ces calculateurs, sont généralement doublées pour garantir une sûreté de fonctionnement en cas de défaillance liée au calculateur du système d'automatisation conditionnelle.

Une architecture connue du document DE 10 2013 020177 A1 comprend deux calculateurs alimentés chacun par une source d'alimentation individuelle.

L'invention a pour but de proposer une architecture de coût abordable pour un système d'assistance à la conduite à automatisation conditionnelle de niveau 3.

Pour ce faire, la présente invention a pour objet une architecture pour système d'aide à la conduite à automatisation conditionnelle apte à contrôler un arrêt automatique d'urgence d'un véhicule, comportant :
- un ensemble de capteurs d'au moins trois technologies différentes pour observer une zone à l'avant d'un véhicule ;
- un calculateur principal apte à recevoir, au travers d'un premier réseau amont de communication de données, des informations dudit ensemble de capteurs, et à transmettre des commandes, au travers d'un premier réseau de communication aval, à un premier calculateur d'un système de contrôle moteur, à un deuxième calculateur d'un système de freinage et à un troisième calculateur d'un système de contrôle de la direction ;

- un calculateur de secours apte à recevoir, au travers d'un deuxième réseau amont de communication de données, des informations dudit ensemble de capteurs;
- une source d'alimentation principale reliée à chaque calculateur; et
- une source d'alimentation de secours ;
caractérisée en ce qu'elle comporte un deuxième réseau de communication aval reliant uniquement le calculateur de secours audit deuxième calculateur du système de freinage pour la transmission de commandes, et en ce que la source d'alimentation de secours est reliée uniquement au calculateur principal, au calculateur de secours et au deuxième calculateur du système de freinage.

Selon d'autres particularités possibles de cette architecture :
- les premiers et deuxièmes réseaux amont et aval de communication de données sont des réseaux de bus série de données, de préférence des réseaux CAN ;
- le calculateur de secours est identique au calculateur principal, auquel cas ils présentent tous deux le même niveau de criticité de défaillance, de préférence un niveau ASIL D ;
- en variante, le calculateur de secours peut avoir un niveau de criticité de défaillance inférieur à celui du calculateur principal, par exemple un niveau ASIL B si le calculateur principal est ASIL D ;
- l'ensemble de capteurs comporte par exemple au moins un capteur d'image, un capteur radar et un capteur laser ;
- le calculateur de secours peut être relié au calculateur principal, et commandé de façon à ne recevoir, au travers du deuxième réseau amont de communication de données, des informations dudit ensemble de capteurs qu'en cas d'une défaillance relative au calculateur principal ;
- en variante, le calculateur de secours reçoit en permanence, au travers du deuxième réseau amont de communication de données, des informations dudit ensemble de capteurs, même en l'absence d'une défaillance relative au calculateur principal.

L'invention et les différents avantages qu'elle procure seront mieux compris au vu de la description suivante, faite en référence aux figures annexées, dans lesquelles :
- la figure 1, déjà décrite ci-dessus, illustre schématiquement les phases mises en oeuvre par un système d'assistance à la conduite à automatisation conditionnelle dans une stratégie connue de retour à l'état sûr;
- la figure 2 illustre schématiquement un exemple d'architecture conforme à l'invention pour un système d'assistance à la conduite à automatisation conditionnelle.

Dans l'ensemble de l'exposé, on appelle « système d'aide à la conduite à automatisation conditionnelle » tout système d'aide à la conduite de niveau 3 (SAE/NHTSA).

En référence à la figure 2, une architecture pour un système d'aide à la conduite à automatisation conditionnelle apte à contrôler un arrêt automatique d'urgence d'un véhicule et garantir un retour à l'état sûr conformément au scénario décrit en figure 1 comporte classiquement un module coeur 1 de contrôle comprenant :
- d'une part, un calculateur 10 principal apte à recevoir, au travers d'un premier réseau amont de communication de données, des informations d'un ensemble 2 de capteurs aptes à observer une zone à l'avant du véhicule ;
- d'autre part, un calculateur 11 de secours, relié au calculateur 10 principal, et apte à recevoir, au travers d'un deuxième réseau amont de communication de données, des informations dudit ensemble 2 de capteurs.

Le système a un niveau de criticité de défaillance ASIL D, de sorte que l'on prévoit, pour l'ensemble 2, d'utiliser trois technologies différentes pour les capteurs. Ainsi, l'ensemble 2 peut comporter, à titre d'exemple non limitatif, au moins un capteur laser 20, un capteur radar 21 et un capteur d'images 22. Les principes de l'invention sont applicables quelle que soit la combinaison des technologies (ou types) différentes utilisée.

Sur la figure 2, le premier réseau amont comporte les trois connexions schématisées en traits pleins entre les capteurs 20 à 22 et le calculateur principal 10, alors que le deuxième réseau amont comporte les trois connexions schématisées en traits interrompus entre ces mêmes capteurs 20 à 22 et le calculateur de secours 10.

Le calculateur principal 10 a pour rôle de traiter les informations en provenance des capteurs 20 à 22, et en particulier d'appliquer, si nécessaire, la stratégie de retour à l'état sûr décrite en référence à la figure 1. Pour ce faire, ce calculateur principal 10 est apte à transmettre les commandes adéquates aux différents calculateurs du véhicule impliqués par cette stratégie, et en particulier respectivement :
- à un premier calculateur 3 d'un système de contrôle moteur,
- à un deuxième calculateur 4 d'un système de freinage ; et
- à un troisième calculateur 5 d'un système de contrôle de la direction.

La transmission des commandes s'effectue au travers d'un premier réseau de communication aval, représenté par les connexions en traits pleins entre le calculateur principal 10 et les trois calculateurs 3, 4 et 5.

Tous les calculateurs décrits ci-avant sont alimentés par une alimentation principale, par exemple une batterie (+BAT1 sur la figure 2).

Le calculateur de secours 11 a quant à lui pour rôle de se substituer au calculateur principal 10 en cas de défaillance de ce dernier.

Conformément à l'invention, au lieu de doubler le réseau de communication aval entre les calculateurs du système d'une part, et les trois calculateurs 3, 4 et 5, il est prévu ici de prévoir un deuxième réseau de communication aval reliant le calculateur 11 de secours au seul deuxième calculateur 4 du système de freinage pour la transmission de commandes. Ce deuxième réseau de communication aval est représenté en traits interrompus entre le calculateur de secours 11 et le calculateur de freinage 4.

Ce type de contrôle est suffisant pour contrôler également la direction du véhicule, notamment à faible vitesse. En effet, les calculateurs des systèmes de freinage sont actuellement tous des calculateurs dits ESP (initiales anglo-saxonnes mises pour Electronic Stability Program) qui peuvent commander de manière différentielle le freinage sur chacune des roues, et faire ainsi en sorte que le véhicule reste sur sa voie jusqu'à l'arrêt.

Par ailleurs, pour pallier un éventuel dysfonctionnement de l'alimentation principale +BAT1, on prévoit dans l'architecture une source d'alimentation de secours (+BAT2 sur la figure 2), par exemple une batterie. Ici encore, l'architecture est simplifiée au strict nécessaire en prévoyant que cette alimentation de secours ne soit utilisée que par le calculateur principal 10, le calculateur de secours 11 et le calculateur 4 du seul système de freinage.

En d'autres termes, une architecture conforme à l'invention consiste à ne redonder, en aval du calculateur du système, la double alimentation et le réseau de communication que pour le calculateur 4 du système de freinage.

Il en résulte une réduction de coût qui ne vient en rien limiter la garantie d'un retour à l'état sûr dans le cas où un conducteur ne serait pas en mesure de reprendre la main.

Dans le cadre de la figure 2, on a considéré que le calculateur de secours 11 était relié au calculateur principal 10, de sorte qu'il ne fonctionne en réception et en émission qu'en cas de défaillance du calculateur principal.

Il est cependant possible, sans sortir du cadre de l'invention, de ne pas relier les deux calculateurs 10 et 11. Dans ce cas, les deux calculateurs 10 et 11 fonctionnent parallèlement en permanence et c'est en cas de défaillance du calculateur principal que les calculateurs 3, 4 et 5 en aval passent en mode secours. On parle alors de « redondance chaude ». Cette solution permet une reconfiguration plus rapide mais consomme plus d'énergie.

## Revendications

1. Architecture pour système d'aide à la conduite à automatisation conditionnelle apte à contrôler un arrêt automatique d'urgence d'un véhicule, comportant :
- un ensemble (2) de capteurs d'au moins trois technologies différentes pour observer une zone à l'avant d'un véhicule ;
- un calculateur (10) principal apte à recevoir, au travers d'un premier réseau amont de communication de données, des informations dudit ensemble (2) de capteurs, et à transmettre des commandes, au travers d'un premier réseau de communication aval, à un premier calculateur (3) d'un système de contrôle moteur, à un deuxième calculateur (4) d'un système de freinage et à un troisième calculateur (5) d'un système de contrôle de la direction ;
- un calculateur (11) de secours apte à recevoir, au travers d'un deuxième réseau amont de communication de données, des informations dudit ensemble de capteurs;
- une source d'alimentation principale reliée à chaque calculateur; et
- une source d'alimentation de secours ;
**caractérisée en ce qu'**elle comporte un deuxième réseau de communication aval reliant uniquement le calculateur (11) de secours audit deuxième calculateur (4) du système de freinage pour la transmission de commandes, et **en ce que** la source d'alimentation de secours est reliée uniquement au calculateur (10) principal, au calculateur (11) de secours et au deuxième calculateur (4) du système de freinage.

2. Architecture selon la revendication 1, **caractérisée en ce que** les premiers et deuxièmes réseaux amont et aval de communication de données sont des réseaux de bus série de données.

3. Architecture selon la revendication 2, **caractérisée en ce que** les premiers et deuxièmes réseaux amont et aval de communication de données sont des réseaux CAN.

4. Architecture selon l'une quelconque des revendications précédentes, **caractérisée en ce que** le calculateur (11) de secours est identique au calculateur (10) principal.

5. Architecture selon l'une quelconque des revendications 1 à 4, **caractérisée en ce que** le calculateur (11) de secours a un niveau de criticité de défaillance inférieur à celui du calculateur (10) principal.

6. Architecture selon la revendication 5, **caractérisée en ce que** le niveau de criticité de défaillance du calculateur (10) principal est ASIL D, et le niveau de criticité de défaillance du calculateur (11) de secours est ASIL B.

7. Architecture selon l'une quelconque des revendications précédentes, **caractérisée en ce que** ledit ensemble (2) de capteurs comporte au moins un capteur d'image, un capteur radar et un capteur laser.

8. Architecture selon l'une quelconque des revendications précédentes, **caractérisée en ce que** le calculateur (11) de secours est relié au calculateur (10) principal, et commandé de façon à ne recevoir, au travers du deuxième réseau amont de communication de données, des informations dudit ensemble de capteurs qu'en cas d'une défaillance relative au calculateur (10) principal.

9. Architecture selon l'une quelconque des revendications 1 à 7, **caractérisée en ce que** le calculateur (11) de secours reçoit en permanence, au travers du deuxième réseau amont de communication de données, des informations dudit ensemble de capteurs, même en l'absence d'une défaillance relative au calculateur (10) principal.

## Patentansprüche

1. Architektur für ein Fahrassistenzsystem mit bedingter Automatisierung, das geeignet ist, einen automatischen Nothalt eines Fahrzeugs zu steuern, umfassend:
- eine Anordnung (2) von Sensoren von mindestens drei unterschiedlichen Technologien, um einen Bereich vor einem Fahrzeug zu beobachten;
- einen Hauptrechner (10), der geeignet ist, durch ein erstes vorgelagertes Datenkommunikationsnetz Informationen der Anordnung (2) von Sensoren zu empfangen und durch ein erstes nachgelagertes Kommunikationsnetz Befehle an einen ersten Rechner (3) eines Motorsteuerungssystems, an einen zweiten Rechner (4) eines Bremssystems und an einen dritten Rechner (5) eines Lenkungssteuerungssystems zu übertragen;
einen Notrechner (11), der geeignet ist, durch ein zweites vorgelagertes Datenkommunikationsnetz Informationen der Anordnung von Sensoren zu empfangen;
- eine Hauptstromquelle, die mit jedem Rechner verbunden ist; und
- eine Notstromquelle;
**dadurch gekennzeichnet, dass** sie ein zweites nachgelagertes Kommunikationsnetz umfasst, das nur den Notrechner (11) mit dem zweiten Rechner (4) des Bremssystems zur Übertragung von Befehlen verbindet, und dadurch, dass die Notstromquelle nur mit dem Hauptrechner (10), dem Notrechner (11) und dem zweiten Rechner (4) des Bremssystems verbunden ist.

2. Architektur nach Anspruch 1, **dadurch gekennzeichnet, dass** das erste und das zweite vorgelagerte und nachgelagerte Datenkommunikationsnetz serielle Datenbusnetze sind.

3. Architektur nach Anspruch 2, **dadurch gekennzeichnet, dass** das erste und das zweite vorgelagerte und nachgelagerte Datenkommunikationsnetz CAN-Netze sind.

4. Architektur nach einem der vorhergehenden Ansprüche, **dadurch gekennzeichnet, dass** der Notrechner (11) mit dem Hauptrechner (10) identisch ist.

5. Architektur nach einem der Ansprüche 1 bis 4, **dadurch gekennzeichnet, dass** der Notrechner (11) ein Ausfallkritikalitätsniveau aufweist, das niedriger als das des Hauptrechners (10) ist.

6. Architektur nach Anspruch 5, **dadurch gekennzeichnet, dass** das Ausfallkritikalitätsniveau des Hauptrechners (10) ASIL D ist und das Ausfallkritikalitätsniveau des Notrechners (11) ASIL B ist.

7. Architektur nach einem der vorhergehenden Ansprüche, **dadurch gekennzeichnet, dass** die Anordnung (2) von Sensoren mindestens einen Bildsensor, einen Radarsensor und einen Lasersensor umfasst.

8. Architektur nach einem der vorhergehenden Ansprüche, **dadurch gekennzeichnet, dass** der Notrechner (11) mit dem Hauptrechner (10) verbunden ist und derart gesteuert wird, dass er nur im Falle eines Ausfalls in Bezug auf den Hauptrechner (10) durch das zweite vorgelagerte Datenkommunikationsnetz Informationen der Anordnung von Sensoren empfängt.

9. Architektur nach einem der Ansprüche 1 bis 7, **dadurch gekennzeichnet, dass** der Notrechner (11) ständig durch das zweite vorgelagerte Datenkommunikationsnetz Informationen der Anordnung von Sensoren empfängt, selbst bei Nichtvorhandensein eines Ausfalls in Bezug auf den Hauptrechner (10).

## Claims

1. Architecture for driving assistance system with conditional automation able to control automatic emergency stopping of a vehicle, comprising:
- a set (2) of sensors of at least three different technologies for observing a zone at the front of a vehicle;
- a main computer (10) able to receive, through a first upstream data communication network, information from said set (2) of sensors, and to transmit commands, through a first downstream communication network, to a first computer (3) of an engine control system, to a second computer (4) of a braking system and to a third computer (5) of a steering control system;
- a backup computer (11) able to receive, through a second upstream data communication network, information from said set of sensors;
- a main power supply source linked to each computer; and
- a backup power supply source;
**characterized in that** it comprises a second downstream communication network linking only the backup computer (11) to said second computer (4) of the braking system for the transmission of commands, and **in that** the backup power supply source is linked only to the main computer (10), to the backup computer (11) and to the second computer (4) of the braking system.

2. Architecture according to Claim 1, **characterized in that** the first and second upstream and downstream data communication networks are serial data bus networks.

3. Architecture according to Claim 2, **characterized in that** the first and second upstream and downstream data communication networks are CAN networks.

4. Architecture according to any one of the preceding claims, **characterized in that** the backup computer (11) is identical to the main computer (10).

5. Architecture according to any one of Claims 1 to 4, **characterized in that** the backup computer (11) has a lower failure criticality level than that of the main computer (10).

6. Architecture according to Claim 5, **characterized in that** the failure criticality level of the main computer (10) is ASIL D, and the failure criticality level of the backup computer (11) is ASIL B.

7. Architecture according to any one of the preceding claims, **characterized in that** said set (2) of sensors comprises at least one image sensor, one radar sensor and one laser sensor.

8. Architecture according to any one of the preceding claims, **characterized in that** the backup computer (11) is linked to the main computer (10), and controlled in such a way as to receive, through the second upstream data communication network, information from said set of sensors only in case of a failure relating to the main computer (10).

9. Architecture according to any one of Claims 1 to 7, **characterized in that** the backup computer (11) receives permanently, through the second upstream data communication network, information from said set of sensors, even in the absence of a failure relating to the main computer (10).
